# EUROPEAN PATENT SPECIFICATION

(11) **EP 3 352 525 B1**
(45) Date of publication and mention of the grant of the patent: **24.03.2021**
(21) Application number: 16909741.7
(22) Date of filing: 25.11.2016
(51) Int. Cl.: H04W 8/24, H04W 12/06, H04M 1/725, G06F 8/65, H04W 84/18

(54) **BLUETOOTH LOW ENERGY (BLE) DEVICE, AND DATA UPDATE SYSTEM AND METHOD**
BLUETOOTH-NIEDRIGENERGIE (BLE)-VORRICHTUNG SOWIE DATENAKTUALISIERUNGSSYSTEM UND -VERFAHREN
DISPOSITIF BLUETOOTH À FAIBLE ÉNERGIE (BLE), ET SYSTÈME ET PROCÉDÉ DE MISE À JOUR DE DONNÉES

(43) Date of publication of application: 25.07.2018
(73) Proprietor: Shenzhen Goodix Technology Co., Ltd., Shenzhen, Guangdong 518045 (CN)
(72) Inventor: ZHOU, Luming, Shenzhen Guangdong 518045 (CN); LIU, Hexing, Shenzhen Guangdong 518045 (CN); SONG, Zhigang, Shenzhen Guangdong 518045 (CN)
(74) Representative: Würmser, Julian
(86) International application number: PCT/CN2016/107201
(87) International publication number: WO 2018/094677

(56) References cited:
- EP-A1- 2 704 053
- WO-A1-2011/095914
- WO-A1-2015/154636
- CN-A- 103 957 607
- CN-A- 104 820 611
- US-A1- 2014 123 123
- US-A1- 2016 013 934
- US-A1- 2016 085 538
- US-B2- 9 307 347

## Description

### TECHNICAL FIELD

The present disclosure relates to wireless communication, in particular to a Bluetooth low energy (BLE)device, and a data update system and method.

### BACKGROUND

Currently, short-range wireless communication technologies such as Bluetooth low energy (BLE), the ZigBee technology, classic Bluetooth and the like have been widely applied to numerous electronic devices, such as smartphones, smart bracelets, wearable devices, sensors and the like. These electronic devices support the over-the-air technology ("OTA" for short), and use air channels for wireless transmission to transmit update packets, so as to complete systems' automatic update functions. The OTA function is used when a failure occurs in the system of an electronic device, when system resources need to be used to extend applications, or when a version is updated, thereby providing convenience for users.

The inventor found that although there are many OTA solutions for existing devices with wireless transmission capabilities, servers and manual operations are needed, and the version cannot be propagated. In the solutions, system update of the electronic device depends on the server. When the server and the electronic device cannot establish a connection, the system of the electronic device cannot be updated. When systems of large quantities of devices need to be updated, heavy load of servers are caused, and system update is affected.

### SUMMARY

An object of an embodiment of the present disclosure is to provide a Bluetooth low energy device, and a data update system and method, by which update data is automatically transferred in a BLE network without manual intervention or a particular background server, thereby more simplifying system update of a device in the BLE network.

To solve the foregoing technical problems, the embodiment of the present disclosure provides a Bluetooth low energy device, including a processor and a BLE communication module. The processor is configured to trigger, when the BLE device obtains and stores update data, the BLE communication module to transfer the update data to a peripheral BLE device by using a BLE link, until it is detected that all peripheral BLE devices obtain the update data. The peripheral BLE device is a device that can perform end-to-end BLE communication with the BLE device that obtains the update data. The updated data is transferred to the peripheral BLE device by initiating a broadcast, establishing, in responsive to a communication request from the peripheral BLE device, a communication connection to the peripheral BLE device, and sending the update data stored in the BLE device. Herein the broadcast carries version information of the update data, and the communication request is initiated when the version information carried in the broadcast is inconsistent with the version information of the update data stored in the peripheral BLE device. Or, the updated data is transferred to the peripheral BLE device by querying, after establishing another communication connection with the peripheral BLE device, version information of existing update data in the peripheral BLE device; and sending, when the version information found by query is inconsistent with version information of the update data stored in the BLE device, the update data stored in the BLE device.

The embodiment of the present disclosure further provides a data update system, including several Bluetooth low energy devices described above.

The embodiment of the present disclosure further provides a data update method, including: after obtaining and storing update data, transferring, by a BLE device, the update data to a peripheral BLE device by using a BLE link, until it is detected that all peripheral BLE devices obtain the update data. The peripheral BLE device is a device that can perform end-to-end BLE communication with the BLE device that obtains the update data. The updated data is transferred to the peripheral BLE device by initiating a broadcast, establishing, in responsive to a communication request from the peripheral BLE device, a communication connection to the peripheral BLE device, and sending the update data stored in the BLE device. Herein the broadcast carries version information of the update data, and the communication request is initiated when the version information carried in the broadcast is inconsistent with the version information of the update data stored in the peripheral BLE device. Or, the updated data is transferred to the peripheral BLE device by querying, after establishing another communication connection with the peripheral BLE device, version information of existing update data in the peripheral BLE device; and sending, when the version information found by query is inconsistent with version information of the update data stored in the BLE device, the update data stored in the BLE device.

Compared with the existing technology, in the embodiment of the present disclosure, when obtaining update data, a BLE device with a BLE wireless transmission capability transfers the update data to a peripheral BLE device. The update data is automatically transferred in a BLE network without manual intervention or a particular background server, thereby more simplifying system update of a device in the BLE network United States Patent US 9307347 and International Patent Application Publication WO 2011/095914, exemplify over-the-air (OTA) firmware update dissemination using Bluetooth Low Energy (BLE), optionally subject to verification of the provenance of the software or firmware updates through the aid of a digital signature. United States patent application publication US 2014/0123123 teaches the dissemination of software update in a multi-hop topology.

### BRIEF DESCRIPTION OF THE DRAWINGS

Fig. 1 is a schematic diagram of updating a firmware version in the existing technology;
Fig. 2 is a schematic structural diagram of a Bluetooth low energy device according to a first embodiment of the present disclosure;
Fig. 3 is a schematic structural diagram of a Bluetooth low energy device including an encryption module according to a second embodiment of the present disclosure;
Fig. 4 is a schematic structural diagram of a Bluetooth low energy device including a decryption module according to the second embodiment of the present disclosure;
Fig. 5 is a schematic structural diagram of a Bluetooth low energy device according to a third embodiment of the present disclosure;
Fig. 6 is a schematic working diagram of a data update system according to a fourth embodiment of the present disclosure;
Fig. 7 is a schematic working diagram of a data update system according to a fifth embodiment of the present disclosure;
Fig. 8 is a schematic flowchart of a data update method according to a sixth embodiment of the present disclosure;
Fig. 9 is a schematic flowchart of a data update method according to a seventh embodiment of the present disclosure;
Fig. 10 is a schematic flowchart of a data update method according to an eighth embodiment of the present disclosure;
Fig. 11 is a schematic flowchart of a data update method performed by an update publishing device according to a ninth embodiment of the present disclosure;
Fig. 12 is a schematic flowchart of a data update method performed by a device other than the update publishing device according to the ninth embodiment of the present disclosure;
Fig. 13 is a schematic flowchart of a data update method performed by an update publishing device according to a tenth embodiment of the present disclosure;
Fig. 14 is a schematic flowchart of a data update method performed by a device other than the update publishing device according to the tenth embodiment of the present disclosure; and
Fig. 15 is a schematic flowchart of a data update method according to an eleventh embodiment of the present disclosure.

### DETAILED DESCRIPTION

To make the objectives, technical solutions, and advantages of the present disclosure clearer, the following describes the embodiments of the present disclosure in detail with reference to the accompanying drawings. A person of ordinary skill in the related art can understand that, in the embodiments of the present disclosure, many technical details are provided to make readers better understand this application. However, even without these technical details and any changes and modifications based on the following embodiments, technical solutions required to be protected by this application can be implemented.

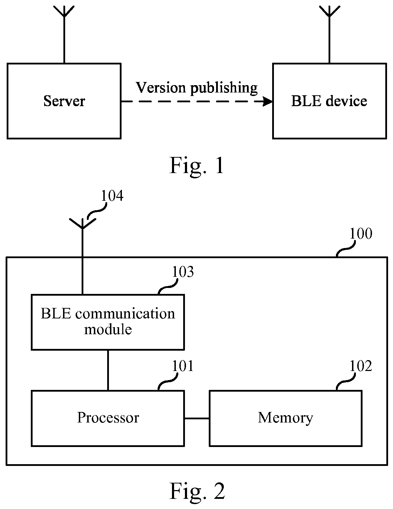

A first embodiment of the present disclosure relates to a Bluetooth low energy device. The Bluetooth low energy device 100 in this embodiment is a device with a Bluetooth communication capability. Specifically, as shown in Fig. 2, the device includes, but is not limited to, a processor 101, a memory 102, a BLE communication module 103, an antenna 104, and the like.

The processor 101 is configured to: run system software in the memory 102, and trigger the BLE communication module 103 to complete communication with other BLE devices. The processor in the present disclosure may use, but is not limited to, an ARM processor, a MIPS processor, or other MCU processors. In addition, it should be noted that the processor in this embodiment may be disposed separately, or may be a component integrated with a function of a process or in a module.

The memory 102 is mainly configured to store the system software and update data, and may store one piece of update data or multiple pieces of update data of different versions. When a version is transferred between BLE devices, an initiator of the transferring takes the update data out of the memory 102 and transfers the update data to a receiver by using a BLE link. The receiver stores the update data into a memory 102 of the receiver device. A storage policy includes, but is not limited to: in space for only one piece of update data, an old version is directly overwritten; or in space for storing multiple pieces of update data, overwriting is alternately performed. The memory 102 may use, but is not limited to, erasable or alterable memory types such as a SRAM, a NorFlash, a NandFlash, and an EEPROM. In addition, the update data described herein includes, but is not limited to, update data of an application program, update data of a BLE communication protocol stack, system configuration data, and the like.

The processor 101 triggers, when the BLE device obtains update data, the BLE communication module 103 to transfer the update data to a peripheral BLE device by using a BLE link, until it is detected that all peripheral BLE devices obtain the update data. The peripheral BLE device is a device that can perform end-to-end BLE communication with the BLE device that obtains the update data.

Specifically, the Bluetooth low energy device may be a smart device (for example, a smartphone), a wearable device (for example, a bracelet), or various sensors. The BLE device implements a function of the BLE communication protocol stack by using the BLE communication module 103. The BLE communication module 103 and the antenna 104 establish a BLE communication channel for low energy BLE devices. In this case, the low energy BLE devices may initiate a communication connection. When the BLE devices are in a connection state, obtained update data may be transferred to other devices by using a BLE link, so as to complete automatic system update of a low energy device. For example, currently, there are three Bluetooth low energy devices, which are a device A, a device B, and a device C respectively. The three Bluetooth low energy devices may establish communication connections by using aBLE communication module. That is, BLE communication may be separately performed between the device A and the device B, between the device B and the device C, and between the device A and the device C. When the device A obtains update data, the device A may transfer the update data to the device B and the device C that can perform BLE communication with the device A. When detecting that both the device B and the device C obtain the update data, the device A no longer transfers the update data. Similarly, when the device B obtains update data, the device B may transfer the update data to the device A and the device C that can perform BLE communication with the device B. When detecting that both the device A and the device C obtain the update data, the device B no longer transfers the update data.

In addition, it should be noted that the BLE device may obtain update data by means of outside help. For example, a user delivers update data to an update publishing device. Alternatively, the BLE device may receive update data transferred by another device, so as to obtain the update data. No matter how the BLE device obtains the update data, the BLE device transfers the update data to the peripheral BLE device of the BLE device. By means of such an update data transferring manner, multiple levels of transferring are performed, and the update data can be automatically transferred to any BLE device in a network, thereby implementing automatic transferring of update data in a BLE network.

Compared with the existing technology, in this embodiment, when obtaining update data, a BLE device with a BLE wireless transmission capability transfers the update data to a peripheral BLE device. The update data is automatically transferred in a BLE network without manual intervention or a particular background server, thereby more simplifying system update of a device in the BLE network.

A second embodiment of the present disclosure relates to a Bluetooth low energy device. The second embodiment is further improved based on the first embodiment. A main improvement is that in the second implementation, the BLE device performs particular security policy processing on update data to ensure security in a device update process.

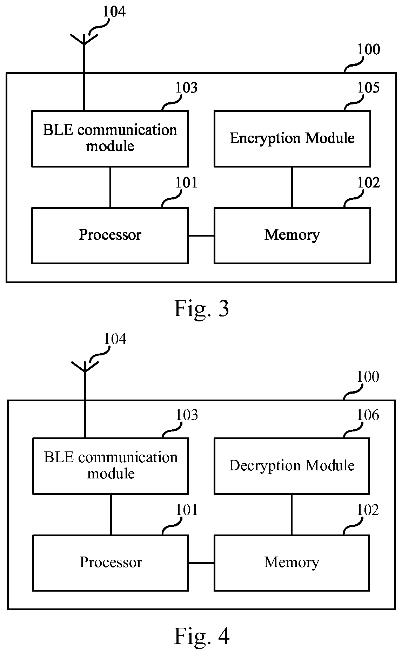

Specifically, as shown in Fig. 3, the Bluetooth low energy device may further include an encryption module 105. The encryption module is configured to perform, when the BLE device is used as an update publishing device, security processing on the update data to form encrypted update data. Correspondingly, the BLE communication module is further configured to transfer the encrypted update data to the peripheral BLE device.

Referring to Fig. 4, the Bluetooth low energy device may further include a decryption module 106. The decryption module 106 is configured to, when the BLE device is used as an update data receiver, perform security verification on received update data; and when verification succeeds, trigger the BLE device to perform system update; or when verification fails, transfer the received update data to a peripheral BLE device by using the BLE communication module.

In addition, it should be noted that, it may be further set that no matter whether the verification performed by the decryption module succeeds, the BLE device transfers the received update data to the peripheral BLE device by using the BLE communication module. That is, when receiving the update data, the BLE device may directly transfer the update data without performing security verification on the update data. In a network, some BLE devices exist only as transit devices for transferring update data.

It should be noted that the security processing performed by the encryption module 105 and the security verification performed by the decryption module 106 should correspond to each other. In addition, the encryption module 105 and the decryption module 106 may exist separately. An encryption module is configured for a BLE device (for example, an update publishing device) that needs to perform security processing on update data, and a decryption module is configured for a BLE device (for example, a to-be-updated device or a transit device) that receives the update data. The encryption module 105 and the decryption module 106 may be bound together as one module, which is invoked to perform a related function when encryption or decryption is required. All existing existence forms of the encryption module 105 and the decryption module 106 may be applied to this application, and are not listed one by one herein.

It should be noted that a security policy may be specified according to a specific situation, and may be a policy that is negotiated only between an update publishing device and a to-be-updated device. For example, feature information of the update publishing device and/or the to-be-updated device is extracted and is mixed with the update data according to a negotiated security policy.

Specifically, the encryption module 105 includes an extraction submodule and a mixing submodule. The extraction submodule is configured to extract a device feature. The mixing submodule is configured to mix the extracted device feature with the update data according to a preset rule, and use mixed data as the encrypted update data.

The decryption module 106 includes a parsing submodule and a matching submodule. The parsing submodule is configured to parse out a device feature from the received update data. The matching submodule is configured to: match the parsed-out device feature with a feature of the BLE device; and if matching succeeds, determine that the verification succeeds; or if matching fails, determine that the verification fails.

When the BLE device is used as the update publishing device, the extraction submodule of the encryption module 105 extracts a feature of the BLE device. The device feature includes, but is not limited to, an address of the update publishing device, a location of the update publishing device, a type of the to-be-updated device, a location of the to-be-updated device, a number of the update publishing device, a number of the to-be-updated device and the like. The address of the update publishing device is an identifier of the update publishing device, and is unique in an entire network. The location of the update publishing device is location information of the update publishing device. The type of the to-be-updated device is a unique identifier of a type of products. The location of the to-be-updated device is a device identifier of an address region. The number of the update publishing device and the number of the to-be-updated device are numbers of devices in the network.

After the device feature is extracted, the mixing submodule 1052 mixes the feature extracted by the extraction submodule with the update data according to the preset rule, to form the encrypted update data. In this case, the BLE device implements security processing on the update data. Then, the BLE device transfers the encrypted update data to the peripheral BLE device by using the BLE communication module 103. After the peripheral BLE device receives the encrypted update data, the parsing submodule of the decryption module 106 parses out the device feature of the received update data. The matching submodule matches the parsed-out device feature with a feature of the device; and if matching succeeds, determines that the verification succeeds; or if matching fails, determine that the verification fails. In this way, the BLE device completes security verification of the update data.

In addition, before update publishing, features of a version publishing device and the to-be-updated device may be extracted, integrated into system update data, and then transferred to the to-be-updated device by using the BLE network. The to-be-updated device extracts a feature value of the system update data, checks a permission of the version publishing device and the feature of the to-be-updated device, and if a condition is met, performs system update, thereby ensuring security in a device update process.

In addition, some universal encryption manners may alternatively be used as the security policy. Specifically, when performing security processing on the update data, the encryption module 105 may further perform encryption processing on the update data according to a key shared between the update publishing device and the to-be-updated device, to form the encrypted update data. When performing security verification on the received update data, the decryption module 106 decrypts the received update data by using the key shared between the update publishing device and the to-be-updated device, to obtain decrypted data; checks correctness of the decrypted data; and if checking succeeds, determines that the verification succeeds; or if checking fails, determines that the verification fails. The key is shared between the update publishing device and the to-be-updated device. For example, the key is shared between the update publishing device and the to-be-updated device in advance in another manner.

Specifically, when the BLE device is used as the publishing device, the encryption module 105 performs encryption processing on the update data and the key together, to form the encrypted update data. The BLE communication module 103 transfers the encrypted update data to the peripheral BLE device. After the peripheral BLE device receives the encrypted update data, the decryption module 106 decrypts the encrypted data by using the shared key, to obtain the decrypted data. The decryption module 106 checks correctness of the obtained decrypted data, and if checking succeeds, determines that the verification succeeds, and the device performs system update. Alternatively, if checking fails, the decryption module 106 determines that the verification fails, and the device does not perform device update and transfers the encrypted data to the peripheral BLE devices.

According to the Bluetooth low energy device provided in this embodiment, an unauthorized device may not be allowed to publish update and a specified device can be updated, thereby ensuring security of a BLE device when transferring update data.

A third embodiment of the present disclosure relates to a Bluetooth low energy device. The third embodiment is further improved based on the first or the second embodiment. A main improvement is that in the third embodiment, the BLE device has a capability of automatically feeding back a status of an updated device, so as to collect statistics about the status of the updated device.

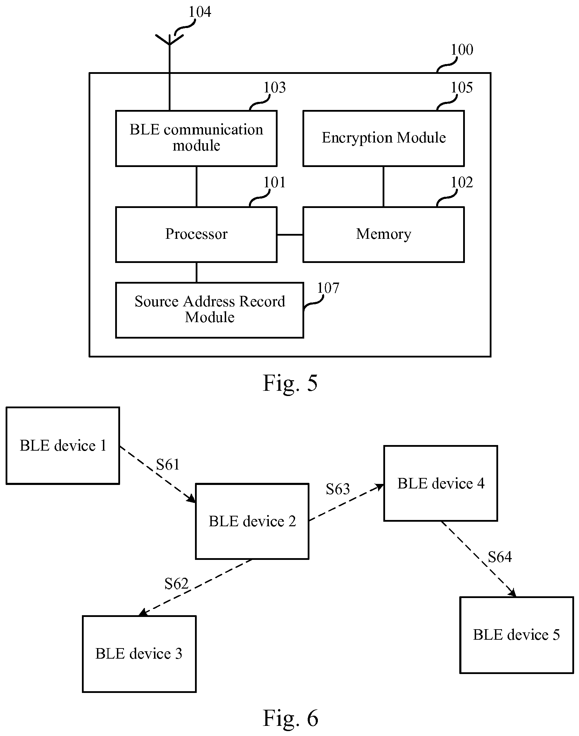

Specifically, as shown in Fig. 5, the Bluetooth low energy device further includes a source address record module107. The source address record module 107 is configured to: if the BLE device is used as an update data receiver, record a source device address when update data is received. The source device address is an address of a BLE device that transfers the update data to the BLE device. The BLE communication module is further configured to transfer device information of the BLE device to a source device when the BLE device completes system update. Alternatively, the BLE communication module is further configured to: when the BLE device receives device information of an updated device, transfer the received device information of the updated device to a source device.

For example, a device address of a BLE device is an identifier of the device, and is unique in the entire network. When the BLE device is used as the receiver to receive the update data, the source address record module 106 records a device address of a BLE device that sends the update data to the BLE device. For example, a BLE device A transfers update data to peripheral devices. A BLE device B receives the update data sent by the BLE device A, and BLE the device B records a device address of the BLE device A by using the source address record module. When completing system update, the BLE device B transfers device information of the BLE device B to the BLE device A according to the recorded device address. When the BLE device B receives device information sent by an updated device, the BLE device B transfers the received device information of the updated device to the BLE device A according to the recorded device address.

That is, the BLE device receiving the update data records a device address of an update data provider. After the device completes system update, the device further sends the device information of the device to the update data provider, and simultaneously transfers the update data to a next device. If the device does not need to perform update, the device transfers the update data to a next device. All BLE devices have a capability of transferring, to the update data provider, device information that is of an updated device and that is transferred by another device. The device information herein includes, but is not limited to, a device address, a device location, a device type, and the like.

The BLE device may be connected to multiple other BLE wireless devices, so as to form a network. In the network, if one BLE device needs to publish update data, the BLE device may be referred to as an update publishing device. Any device may become an update publishing device. The update publishing device may perform multiple levels of transferring in the foregoing update data transferring manner, and automatically transfer the update data to any BLE device in the network. In addition, each device sends device information of an updated device according to a recorded address of a preceding update data provider, until all device information is fed back to the update publishing device that publishes the update data. Then, the update publishing device collects statistics about a status of the updated device, such as quantity and device distribution and the like.

A person skilled in the related art should understand that the source address record module may be an individual module, or may be a part of a memory, provided that an address of the source device can be recorded and device information can be accurately fed back according to the recorded address. A record form of the source address shall not be limited in this application. Any manner of recording the source address shall fall within the protection scope of this application.

According to the Bluetooth low energy device provided in this embodiment, statistics about a status of an updated device can be quickly collected, such as quantity and distribution of updated devices and the like. Update data is optimized according to the statistics, so as to provide better system update data to users.

A fourth embodiment of the present disclosure relates to a data update system. The data update system includes several Bluetooth low energy devices according to any one of the first to the third embodiments.

Any device in a BLE network may be used as an update publishing device. An update packet is transferred to any device in the network via the BLE network. That the data update system includes five BLE devices is used as an example for description. As shown in Fig. 6, it is assumed that a BLE device 1 is selected as an update publishing device, and a BLE device 5 is selected as a to-be-updated device. A process of transferring update data in the network is as follows:
When obtaining update data from the outside, the BLE device 1 transfers the update data to a BLE device 2, as shown by S61 in Fig. 6.

When receiving the update data, the BLE device 2 transfers the received update data to a peripheral BLE device of the BLE device 2. The peripheral device of the BLE device 2 includes a BLE device 3 and a BLE device 4. Therefore, the BLE device 2 transfers the update data to the BLE device 3 and the BLE device 4 respectively, as shown by S62 and S63 in Fig. 6.

When the BLE device 3 receives the update data, because there is only the BLE device 2 around the BLE device 3, the BLE device 3 does not further transfer the update data.

When receiving the update data, the BLE device 4 transfers the update data to a peripheral device of the BLE device 4. The peripheral device of the BLE device 3 includes the BLE device 2 and the BLE device 5. Therefore, the BLE device 3 transfers the update data to the BLE device 5, as shown by S64 in Fig. 6.

After receiving the update data, the BLE device 5 updates system data.

It should be noted that a BLE communication link is an end-to-end link. After a device at one end of the link receives update data by using another BLE link and stores the update data in a memory, the device queries whether a device at the other end stores the update data; and if the device at the other end does not store the update data or a version of the update data is lower, transfers the update data; or if a version of the update data at the peer end is higher, reads the update data and stores the update data in the memory. The device may query update data information in the device at the other end after receiving complete update data. Alternatively, after receiving complete update data, the device at the peer end may then instruct the device to perform query.

In addition, a manner of sending and reading update data between devices may include, but is not limited to, file packetizing, breakpoint transmission, or the like, so as to ensure quality of version transferring, and ensure data transmission for normal use at the greatest extent.

According to the data update system provided in this embodiment, a BLE device in the system can autonomously perform system update of the device without requiring a server or manual intervention, thereby providing a simpler and rapider update system for users.

It is easy to find that this embodiment is a system embodiment corresponding to the first embodiment. Therefore, this embodiment may be implemented by interworking with the first embodiment. Related technical details mentioned in the first embodiment are still available in this embodiment. To avoid repetition, details are not provided herein again. Correspondingly, related technical details mentioned in this embodiment may also be applied to the first embodiment.

A fifth embodiment of the present disclosure relates to a data update system. The fifth embodiment is further improved based on the fourth implementation. A specific improvement is that in the fifth implementation, the data update system may collect statistics about an update status of a device.

Specifically, any BLE device in the data update system transfers device information of the BLE device to a source device when the BLE device completes system update. Alternatively, any BLE device in the data update system transfers, when the BLE device receives device information of an updated device, the received device information of the updated device to a source device, until an update publishing device obtains device information of all updated devices. The source device is a BLE device that transfers update data to the BLE device.

In the data update system, any BLE device has a capability of transferring, to an update data provider, device information that is of an updated device and that is transferred by another device. That statistics about an update status of the five BLE devices listed in the fourth embodiment are collected after the BLE devices transfer the update data is used as an example for description.

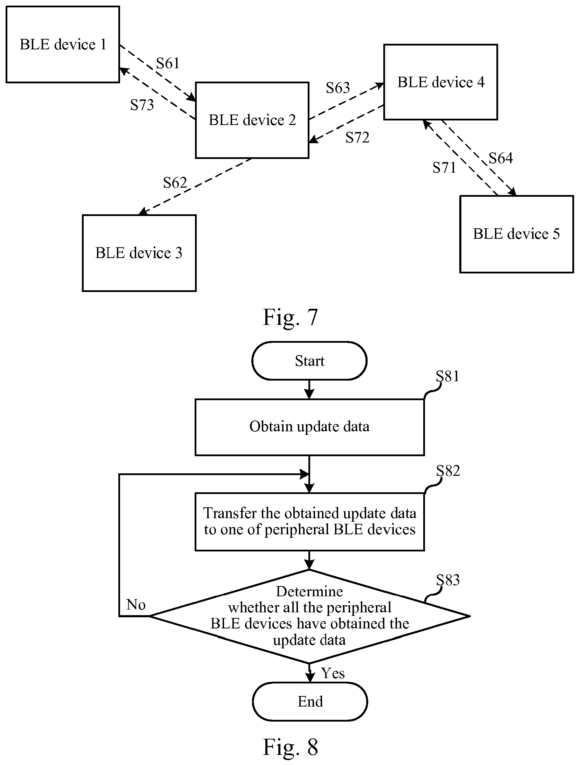

After completing data update, the BLE device 5 feeds back device information of the BLE device 5 to the BLE device 4, as shown by S71 in Fig. 7.

When receiving the device information fed back by the BLE device 5, the BLE device 4 feeds back the device information of the BLE device 5 to the BLE device 2, as shown by S72 in Fig. 7.

When receiving the device information fed back by the BLE device 5, the BLE device 2 feeds back the device information of the BLE device 5 to the BLE device 1, as shown by S73 in Fig. 7.

The BLE device 1 collects statistics about the received device information.

According to the data update system provided in this embodiment, statistics about a status of an updated device in the system can be quickly collected, such as a quantity and distribution of updated devices. Update data is optimized according to the statistics, so as to provide better system update data to users.

It is easy to find that this embodiment is a system embodiment corresponding to the third embodiment. Therefore, this embodiment may be implemented by interworking with the third embodiment. Related technical details mentioned in the third embodiment are still available in this embodiment. To avoid repetition, details are not provided herein again. Correspondingly, related technical details mentioned in this embodiment may also be applied to the third embodiment.

A sixth embodiment of the present disclosure relates to a data update method. The data update method is based on the Bluetooth low energy device described in the first implementation. A specific procedure of the data update method is shown in Fig. 8, and includes the following steps.

Step S81: Obtain update data.

Specifically, the BLE device obtains the update data in two manners. In a first manner, the BLE device is used as an update publishing device to obtain update data from the outside. In a second manner, the BLE device obtains update data transferred from another BLE device.

Step S82: Transfer the obtained update data to one of peripheral BLE devices.

Step S83: Determine whether all the peripheral BLE devices have obtained the update data. If not all the peripheral BLE devices have obtained the update data, return to step S82; or if all the peripheral BLE devices have obtained the update data, the procedure ends.

That is, after obtaining the update data, the BLE device autonomously transfers the update data to the peripheral BLE devices. If all the peripheral BLE devices have obtained the update data, the BLE device stops transferring the update data to the peripheral BLE devices.

According to the data update method in this embodiment, the Bluetooth low energy device autonomously transfers the update data without requiring a server or manual intervention, until all the peripheral BLE devices obtain the update data. Therefore, during system update, the Bluetooth low energy device no longer depends on the server, and can autonomously perform system update, bringing convenience to users.

Division of the steps of the foregoing methods is only for ease of description, and during implementation, the steps may be combined into one step or some steps may be split into multiple steps. All shall fall within the protection scope of this application provided that a same logical relationship is included. Insignificant modifications added to or insignificant designs introduced in an algorithm or a procedure without changing the core of the algorithm or the procedure shall fall within the protection scope of this application.

It is easy to find that this embodiment corresponds to the first embodiment. Therefore, this embodiment may be implemented by interworking with the first embodiment. Related technical details mentioned in the first embodiment are still available in this embodiment, and technical effects that can be achieved in the first embodiment can still be achieved in this embodiment. To avoid repetition, details are not described herein again. Correspondingly, related technical details mentioned in this embodiment may also be applied to the first embodiment.

A seventh embodiment of the present disclosure relates to a data update method. The seventh embodiment is further improved based on the sixth embodiment. An improvement is that in the seventh embodiment, a method for transferring, by a BLE device used as a secondary device, update data to a peripheral BLE device is provided.

After obtaining update data, a BLE device used as a secondary device initiates a broadcast, and sends the update data stored in the device after establishing a communication connection with any one of peripheral BLE devices. The foregoing steps are repeated, until all the peripheral BLE devices obtain the update data. The broadcast carries version information of the update data.

The peripheral BLE device listens to the broadcast; after listening and obtaining the broadcast, reads the version information that is of the update data and that is carried in the broadcast; compares the read version information with version information of update data stored in the device; if the two are inconsistent, initiates a communication request; and receives the update data after a communication connection is established.

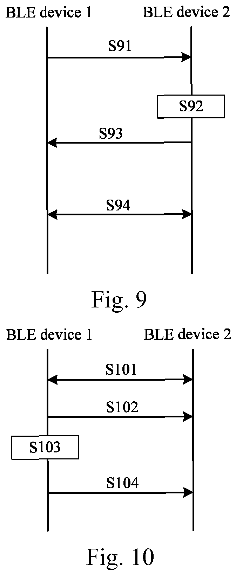

A specific procedure is shown in Fig. 9, and includes the following steps:
Step S91: A BLE device 1 having obtained update data initiates a broadcast, where the broadcast carries version information of the update data. Specifically, the broadcast information includes version information that is of one or more pieces of update data that is stored by the device.
Step S92: A BLE device 2 listens to the broadcast; after listening and obtaining the broadcast, reads the version information that is of the update data and that is carried in the broadcast; compares the read version information with version information of update data stored in the device; and if the two are inconsistent, performs step S93; or otherwise, continues to perform listening.
Step S93: The BLE device 2 initiates a communication request to the BLE device 1.
Step S94: After a communication connection is established, the BLE device 1 and the BLE device 2 transfer the update data.

A process of establishing the communication connection herein is similar to that of establishing the communication connection between Bluetooth devices in the existing technology. Details are not described herein again.

Division of the steps of the foregoing methods is only for ease of description, and during implementation, the steps may be combined into one step or some steps may be split into multiple steps. All shall fall within the protection scope of this application provided that a same logical relationship is included. Insignificant modifications added to or insignificant designs introduced in an algorithm or a procedure without changing the core of the algorithm or the procedure shall fall within the protection scope of this application.

An eighth embodiment of the present disclosure relates to a data update method. The eighth embodiment is further improved based on the sixth embodiment. An improvement is that in the eighth embodiment, a method for transferring, by a BLE device used as a primary device, update data to a peripheral BLE device is provided.

Specifically, after establishing a communication connection with any one of peripheral BLE devices, the BLE device queries version information of existing update data at the communicating peer end; and sends, if the version information found by query is inconsistent with version information of update data stored in the device, the update data stored in the device.

A specific procedure is shown in Fig. 10, and includes the following steps:
Step S101: A BLE device 1 establishes a communication connection with a BLE device 2. A process of establishing the communication connection herein is similar to that of establishing the communication connection between Bluetooth devices in the existing technology. Details are not described herein again.
Step S102: The BLE device 1 queries version information of existing update data in the BLE device 2.
Step S103: The BLE device 1 performs step S104 when determining that the found version information by query is inconsistent with version information of update data stored in the device; or otherwise, disrupts the connection.
Step S104: The BLE device 1 sends the update data stored in the device to the BLE device 2.

Division of the steps of the foregoing methods is only for ease of description, and during implementation, the steps may be combined into one step or some steps may be split into multiple steps. All shall fall within the protection scope of this application provided that a same logical relationship is included. Insignificant modifications added to or insignificant designs introduced in an algorithm or a procedure without changing the core of the algorithm or the procedure shall fall within the protection scope of this application.

A ninth embodiment of the present disclosure relates to a data update method. The ninth embodiment is further improved based on the sixth embodiment. An improvement is that in the ninth embodiment, according to the data update method, specific security policy processing is performed on update data to ensure security in a device update process.

A BLE device is used as an update publishing device to obtain update data. After the update data is obtained, security processing is performed on the obtained update data, to form encrypted update data. When the update data is transferred to a peripheral BLE device, the encrypted update data is transferred to the peripheral BLE device.

The BLE device is used as update data receiver to receive update data from a sender, so as to obtain the update data. After the update data is received, security verification is performed on the received update data. If verification succeeds, the BLE device is triggered to performed system update. If verification fails, the received update data is transferred to a peripheral BLE device.

In addition, it should be noted that, it may be further set that no matter whether the verification succeeds, the BLE device transfers the received update data to the peripheral BLE device. That is, when receiving the update data, the BLE device may directly transfer the update data without performing security verification on the update data. In a network, some BLE devices only exist as transit devices for transferring update data.

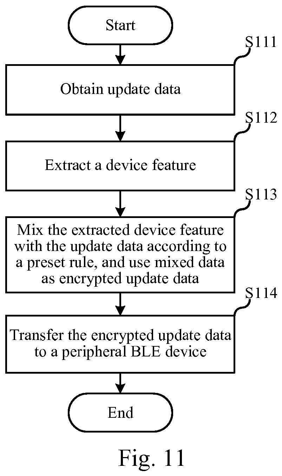

A policy for performing security processing may be negotiated according to a specific situation. For example, according to a negotiated security policy, extracted feature information of the update publishing device and/or a to-be-updated device is mixed with the update data. A specific procedure performed by the update publishing device is shown in Fig. 11, and includes the following steps:
Step S111: Obtain update data.
Step S112: Extract a device feature.
Step S113: Mix the extracted device feature with the update data according to a preset rule, and use mixed data as encrypted update data.
Step S114: Transfer the encrypted update data to a peripheral BLE device.

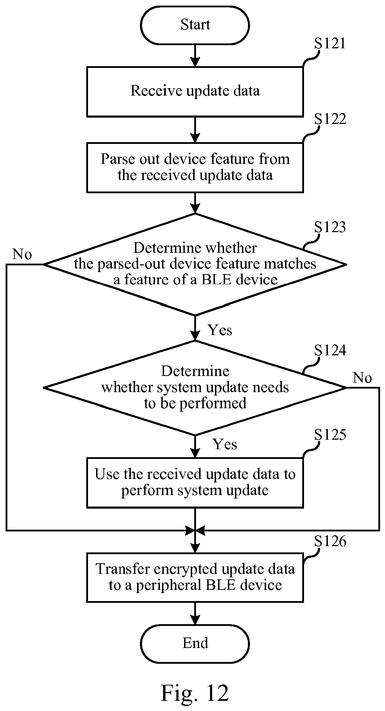

A specific procedure performed by a device other than the update publishing device is shown in Fig. 12, and includes the following steps:
Step S121: Receive update data.
Step S122: Parse out a device feature from the received update data.
Step S123: Determine whether the parsed-out device feature matches a feature of the BLE device; and when matching succeeds, determine that verification succeeds, and step S124 is performed; or when matching fails, determine that verification fails, and step S126 is performed.
Step S124: Determine whether system update needs to be performed. If yes, step S125 is performed; or if not, step S126 is performed.
Step S125: Use the received update data to perform system update.
Step S126: Transfer encrypted update data to a peripheral BLE device.

Division of the steps of the foregoing methods is only for ease of description, and during implementation, the steps may be combined into one step or some steps may be split into multiple steps. All shall fall within the protection scope of this application provided that a same logical relationship is included. Insignificant modifications added to or insignificant designs introduced in an algorithm or a procedure without changing the core of the algorithm or the procedure shall fall with in the protection scope of this application.

It is easy to find that this embodiment corresponds to the second embodiment. Therefore, this embodiment may be implemented by interworking with the second embodiment. Related technical details mentioned in the second embodiment are still available in this embodiment, and technical effects that can be achieved in the second embodiment can still be achieved in this embodiment. To avoid repetition, details are not described herein again. Correspondingly, related technical details mentioned in this embodiment may also be applied to the second embodiment.

A tenth embodiment of the present disclosure relates to a data update method. The tenth embodiment is basically the same as the ninth embodiment. A main difference is that in the ninth embodiment, security processing is performed by extracting feature information of an update publishing device and/or a to-be-updated device and mixing the feature information with update data, while in the tenth embodiment, security processing is performed by means of encryption. A key is shared between the update publishing device and the to-be-updated device. For example, the key is shared between the update publishing device and the to-be-updated device in advance in another manner.

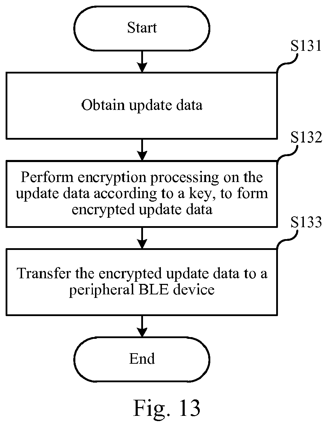

A specific procedure performed by the update publishing device is shown in Fig. 13, and includes the following steps:
Step S131: Obtain update data.
Step S132: Perform encryption processing on the update data according to the key shared between the update publishing device and the to-be-updated device, to form encrypted update data.
Step S133: Transfer the encrypted update data to a peripheral BLE device.

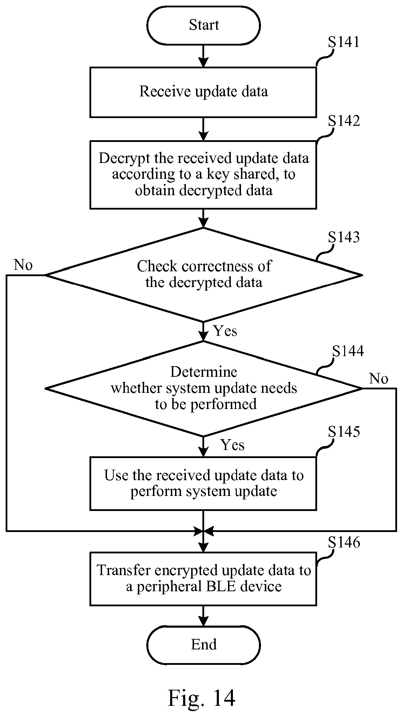

A specific procedure performed by a device other than the update publishing device is shown in Fig. 14, and includes the following steps:
Step S141: Receive update data.
Step S142: Decrypt the received update data according to a key shared between the update publishing device and the to-be-updated device, to obtain decrypted data.
Step S143: Check correctness of the decrypted data; and when checking succeeds, determine that verification succeeds, and step 144 is performed; or when checking fails, determine that verification fails, and step S146 is performed.
Step S144: Determine whether system update needs to be performed. If yes, step S145 is performed; or if not, step S146 is performed.
Step S145: Use the received update data to perform system update.
Step S146: Transfer encrypted update data to a peripheral BLE device.

It is easy to find that this implementation corresponds to the second implementation. Therefore, this embodiment may be implemented by interworking with the second embodiment. Related technical details mentioned in the second embodiment are still available in this embodiment, and technical effects that can be achieved in the second embodiment can still be achieved in this embodiment. To avoid repetition, details are not described herein again. Correspondingly, related technical details mentioned in this embodiment may also be applied to the second embodiment.

An eleventh embodiment of the present disclosure relates to a data update method. The eleventh embodiment is further improved based on the sixth embodiment. An improvement is that in the eleventh embodiment, statistics about information about an updated device may be collected.

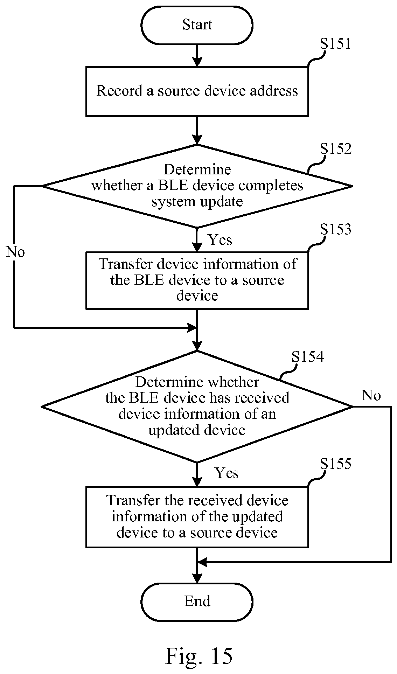

A BLE device is used as an update data receiver to receive update data from a sender, so as to obtain the update data. After receiving the update data, the BLE device performs a specific procedure as shown in Fig. 15. The procedure includes the following steps:
Step S151: Record a source device address. The source device address is an address of a BLE device that transfers update data to the BLE device.
Step S152: Determine whether the BLE device completes system update. If yes, step S153 is performed; or otherwise, step S154 is performed.
Step S153: Transfer device information of the BLE device to a source device.
Step S154: Determine whether the BLE device has received device information of an updated device. If yes, step S155 is performed; or otherwise, the procedure ends.
Step S155: Transfer the received device information of the updated device to a source device.

Division of the steps of the foregoing methods is only for ease of description, and during implementation, the steps may be combined into one step or some steps may be split into multiple steps. All shall fall within the protection scope of this application provided that a same logical relationship is included. Insignificant modifications added to or insignificant designs introduced in an algorithm or a procedure without changing the core of the algorithm or the procedure shall fall within the protection scope of this application.

It is easy to find that this embodiment corresponds to the third embodiment. Therefore, this embodiment may be implemented by interworking with the third embodiment. Related technical details mentioned in the third embodiment are still available in this embodiment, and technical effects that can be achieved in the third embodiment can still be achieved in this embodiment. To avoid repetition, details are not described herein again. Correspondingly, related technical details mentioned in this embodiment may also be applied to the third embodiment.

It should be noted that the modules in the embodiments of this application are all logical modules. During actual application, a logical unit may be a physical unit, or may be a part of a physical unit, or may be implemented by a combination of multiple physical units. In addition, to outstand a creative part of the present disclosure, the embodiments introduce the units that are closely related to the technical problems to be resolved in the present disclosure. However, this does not indicate that other units are not included in the embodiments.

Persons of ordinary skill in the related art should understand that all or some of the steps of the method in the embodiments may be implemented by a program instructing relevant hardware. The program is stored in a storage medium and includes several instructions to enable a device (which may be a single-chip microcomputer, a chip, or the like) or a processor to perform all or some of the steps of the method in the embodiments of this application. The foregoing storage medium includes any medium that can store program code, such as a USB flash drive, a removable hard disk, a read-only memory (ROM), a random access memory (RAM), a magnetic disk, or an optical disc.

## Claims

1. A Bluetooth low energy BLE device, **characterized by** comprising a processor (101) and a BLE communication module (103), wherein
the processor (101) is configured to trigger, when the BLE device obtains and stores update data, the BLE communication module (103) to transfer the update data to a peripheral BLE device by using a BLE link, until that all peripheral BLE devices obtain the update data is detected, wherein
the peripheral BLE device is a device that enables to perform end-to-end BLE communication with the BLE device that obtains the update data;
wherein, the transferring the update data to the peripheral BLE device comprises:
initiating a BLE broadcast, wherein the broadcast carries version information of the update data; and
in response to a BLE communication request from the peripheral BLE device, establishing a BLE communication connection to the peripheral BLE device and sending over the established BLE communication connection the update data stored in the BLE device;
wherein the BLE communication request is initiated when the version information carried in the BLE broadcast is read by the peripheral BLE device and is inconsistent with the version information of the update data stored in the peripheral BLE device.

2. The BLE device according to claim 1, **characterized in that** the BLE device further comprises an encryption module (105);
the encryption module (105) is configured to perform, when the BLE device is used as an update publishing device, security processing on the update data to form encrypted update data; and
the BLE communication module (103) is further configured to transfer the encrypted update data to the peripheral BLE device.

3. The BLE device according to claim 2, **characterized in that** the encryption module (105) comprises an extraction submodule configured to extract a device feature and a mixing submodule configured to: mix the extracted device feature with the update data according to a preset rule and use mixed data as the encrypted update data; or
the encryption module (105) is configured to, when performing security processing on the update data, perform encryption processing on the update data according to a key shared between the update publishing device and a to-be-updated device so as to form the encrypted update data;
wherein the device feature comprises a feature of the update publishing device and/or a to-be-updated device.

4. The BLE device according to any one of claims 1 to 3, **characterized in that** the BLE device further comprises a decryption module (106); and
the decryption module (106) is configured to:
perform security verification on received update data when the BLE device is used as an update data receiver; and
trigger the BLE device to perform system update if verification succeeds; or
transfer the received update data to the peripheral BLE device by using the BLE communication module (103) if verification fails.

5. The BLE device according to claim 4, **characterized in that** the decryption module (106) comprises a parsing submodule configured to parse out a device feature from the received update data and a matching submodule configured to: match the parsed-out device feature with a feature of the BLE device; and determine that the verification succeeds if matching succeeds; or determine that the verification fails if matching fails; or
the decryption module (106) is configured to: decrypt the received update data by using the key shared between the update publishing device and the to-be-updated device, to obtain decrypted data when performing security verification on the received update data; check correctness of the decrypted data; and determine that the verification succeeds if checking succeeds; or determine that the verification fails if checking fails;
wherein the device feature comprises a feature of the update publishing device and/or the to-be-updated device.

6. The BLE device according to claim 1, **characterized in that** the BLE device further comprises a source address record module (107);
the source address record module (107) is configured to: record a source device address when update data is received if the BLE device is used as an update data receiver,;
wherein the source device address is an address of a BLE device that transfers the update data to the BLE device; and
the BLE communication module (103) is further configured to transfer device information of the BLE device to a source device when the BLE device completes system update; or
the BLE communication module (103) is further configured to: transfer the received device information of the updated device to a source device when the BLE device receives device information of an updated device.

7. A data update system, **characterized in that** the data update system comprises several Bluetooth low energy devices according to any one of claims 1 to 6.

8. A data update method, **characterized by** comprising:
transferring, by a BLE device when obtaining and storing update data, the update data to a peripheral BLE device by using a BLE link, until that all peripheral BLE devices obtain the update data is detected, wherein
the peripheral BLE device is a device that enables to perform end-to-end BLE communication with the BLE device that obtains the update data;
wherein the transferring the update data to the peripheral BLE device comprises:
initiating a BLE broadcast, wherein the BLE broadcast carries version information of the update data;
in response to a BLE communication request from the peripheral BLE device, establishing a BLE communication connection to the peripheral BLE device and sending over the established BLE communication connection the update data stored in the BLE device; wherein the BLE communication request is initiated when the version information carried in the BLE broadcast is read by the peripheral BLE device and is inconsistent with the version information of the update data stored in the peripheral BLE device.

9. The data update method according to claim 8, **characterized in that** the BLE device is used as an update publishing device to obtain the update data;
after the update data is obtained, and before the transferring the update data to a peripheral BLE device, the data update method further comprises:
performing security processing on the obtained update data to form encrypted update data; and
transferring the encrypted update data to the peripheral BLE device, during the transferring the update data to a peripheral BLE device.

10. The data update method according to claim 9, **characterized in that** during the performing security processing on the obtained update data, encryption processing is performed on the update data according to a key shared between the update publishing device and a to-be-updated device; or
the performing security processing on the obtained update data to form encrypted update data specifically comprises: extracting a device feature; and mixing the extracted device feature with the update data according to a preset rule, and using mixed data as the encrypted update data.

11. The data update method according to any one of claims 8 to 10, **characterized in that** the BLE device is used as an update data receiver to receive update data from a sender, so as to obtain the update data; and
after the update data is received, the data update method further comprises:
performing security verification on the received update data; and
triggering the BLE device to perform system update if verification succeeds; or
transferring the received update data to the peripheral BLE device if verification fails.

12. The data update method according to claim 11, **characterized in that** the performing security verification on the received update data specifically comprises: parsing out a device feature from the received update data; matching the parsed-out device feature with a feature of the BLE device; and determining that the verification succeeds if matching succeeds; or determining that the verification fails if matching fails; or
the performing security verification on the received update data specifically comprises:
decrypting the received update data according to the key shared between the update publishing device and the to-be-updated device, to obtain decrypted data; checking correctness of the decrypted data; and determining that the verification succeeds if checking succeeds; or determining that the verification fails if checking fails;
wherein the device feature comprises a feature of the update publishing device and/or the to-be-updated device.

13. The data update method according to claim 8, **characterized in that** the BLE device is used as an update data receiver to receive update data from a sender, so as to obtain the update data; and
after the update data is received, the data update method further comprises:
recording a source device address, wherein the source device address is an address of a BLE device that transfers the update data to the BLE device; and
transferring device information of the BLE device to a source device when the BLE device completes system update; or
transferring received device information of an updated device to a source device when the device information of the updated device is received.

## Patentansprüche

1. Bluetooth-Niedrigenergie-BLE-Vorrichtung, **dadurch gekennzeichnet, dass** sie einen Prozessor (101) und ein BLE-Kommunikationsmodul (103) umfasst, wobei
der Prozessor (101) derart konfiguriert ist, dass er, wenn die BLE-Vorrichtung Aktualisierungsdaten erhält und speichert, das BLE-Kommunikationsmodul (103) triggert, die Aktualisierungsdaten an eine periphere BLE-Vorrichtung unter Verwendung einer BLE-Verbindung zu übertragen, bis erkannt wird, dass alle peripheren BLE-Vorrichtungen die Aktualisierungsdaten erhalten, wobei
die periphere BLE-Vorrichtung eine Vorrichtung ist, die es ermöglicht, eine Ende-zu-Ende-BLE-Kommunikation mit der BLE-Vorrichtung durchzuführen, welche die Aktualisierungsdaten erhält;
wobei das Übertragen der Aktualisierungsdaten an die periphere BLE-Vorrichtung umfasst:
Initiieren eines BLE-Broadcasting, wobei das Broadcasting Versionsinformationen der Aktualisierungsdaten trägt; und
als Reaktion auf eine BLE-Kommunikationsanfrage von der peripheren BLE-Vorrichtung, Aufbauen einer BLE-Kommunikationsverbindung zu der peripheren BLE-Vorrichtung und Senden der in der BLE-Vorrichtung gespeicherten Aktualisierungsdaten über die aufgebaute BLE-Kommunikationsverbindung;
wobei die BLE-Kommunikationsanfrage initiiert wird, wenn die im BLE-Broadcasting übertragene Versionsinformation von der peripheren BLE-Vorrichtung gelesen wird und mit der Versionsinformation der in der peripheren BLE-Vorrichtung gespeicherten Aktualisierungsdaten nicht übereinstimmt.

2. BLE-Vorrichtung nach Anspruch 1, **dadurch gekennzeichnet, dass** die BLE-Vorrichtung ferner ein Verschlüsselungsmodul (105) umfasst;
das Verschlüsselungsmodul (105) derart konfiguriert ist, dass es, wenn die BLE-Vorrichtung als Aktualisierungsveröffentlichungsvorrichtung verwendet wird, eine Sicherheitsverarbeitung an den Aktualisierungsdaten durchführt, um verschlüsselte Aktualisierungsdaten zu bilden; und
das BLE-Kommunikationsmodul (103) ferner konfiguriert ist, um die verschlüsselten Aktualisierungsdaten an die periphere BLE-Vorrichtung zu übertragen.

3. BLE-Vorrichtung nach Anspruch 2, **dadurch gekennzeichnet, dass** das Verschlüsselungsmodul (105) ein Extraktions-Submodul, das derart konfiguriert ist, dass es ein Vorrichtungsmerkmal extrahiert, und ein Misch-Submodul umfasst, das konfiguriert ist, das extrahierte Vorrichtungsmerkmal mit den Aktualisierungsdaten gemäß einer voreingestellten Regel zu mischen und gemischte Daten als die verschlüsselten Aktualisierungsdaten zu verwenden; oder
das Verschlüsselungsmodul (105) derart konfiguriert ist, dass es beim Durchführen einer Sicherheitsverarbeitung an den Aktualisierungsdaten eine Verschlüsselungsverarbeitung an den Aktualisierungsdaten gemäß einem zwischen der Aktualisierungsveröffentlichungsvorrichtung und einer zu aktualisierenden Vorrichtung geteilten Schlüssel durchführt, um die verschlüsselten Aktualisierungsdaten zu bilden;
wobei das Vorrichtungsmerkmal ein Merkmal der Aktualisierungsveröffentlichungsvorrichtung und/oder einer zu aktualisierenden Vorrichtung umfasst.

4. BLE-Vorrichtung nach einem der Ansprüche 1 bis 3, **dadurch gekennzeichnet, dass** die BLE-Vorrichtung ferner ein Entschlüsselungsmodul (106) umfasst; und
das Entschlüsselungsmodul (106) ist konfiguriert zum:
Durchführen einer Sicherheitsverifizierung der empfangenen Aktualisierungsdaten, wenn die BLE-Vorrichtung als Aktualisierungsdatenempfänger verwendet wird; und
Triggern der BLE-Vorrichtung, eine Systemaktualisierung durchzuführen, wenn die Verifizierung erfolgreich ist; oder
Übertragen der empfangenen Aktualisierungsdaten mit Hilfe des BLE-Kommunikationsmoduls (103) an die periphere BLE-Vorrichtung, wenn die Verifizierung fehlschlägt.

5. BLE-Vorrichtung nach Anspruch 4, **dadurch gekennzeichnet, dass** das Entschlüsselungsmodul (106) ein Parsing-Submodul umfasst, das derart konfiguriert ist, dass es ein Vorrichtungsmerkmal aus den empfangenen Aktualisierungsdaten parst, und ein Matching-Submodul umfasst, das derart konfiguriert ist, dass es das geparste Vorrichtungsmerkmal mit einem Merkmal der BLE-Vorrichtung matcht; und bestimmt, dass die Verifizierung erfolgreich ist, wenn das Matching erfolgreich ist; oder bestimmt, dass die Verifizierung fehlschlägt, wenn das Matching fehlschlägt; oder
das Entschlüsselungsmodul (106) ist konfiguriert zum: Entschlüsseln der empfangenen Aktualisierungsdaten unter Verwendung des zwischen der Aktualisierungsveröffentlichungsvorrichtung und der zu aktualisierenden Vorrichtung geteilten Schlüssels, um entschlüsselte Daten zu erhalten, wenn eine Sicherheitsverifizierung der empfangenen Aktualisierungsdaten durchgeführt wird; Überprüfen der Korrektheit der entschlüsselten Daten; und Bestimmen, dass die Verifizierung erfolgreich ist, wenn die Überprüfung erfolgreich ist; oder Bestimmen, dass die Verifizierung fehlschlägt, wenn die Überprüfung fehlschlägt;
wobei das Vorrichtungsmerkmal ein Merkmal der Aktualisierungsveröffentlichungsvorrichtung und/oder der zu aktualisierenden Vorrichtung umfasst.

6. BLE-Vorrichtung nach Anspruch 1, **dadurch gekennzeichnet, dass** die BLE-Vorrichtung ferner ein Quelladressaufzeichnungsmodul (107) umfasst;
das Quelladressaufzeichnungsmodul (107) ist konfiguriert zum: Aufzeichnen einer Quellvorrichtungsadresse, wenn Aktualisierungsdaten empfangen werden, falls die BLE-Vorrichtung als ein Aktualisierungsdatenempfänger verwendet wird,;
wobei die Quellvorrichtungsadresse eine Adresse einer BLE-Vorrichtung ist, welche die Aktualisierungsdaten an die BLE-Vorrichtung überträgt; und
das BLE-Kommunikationsmodul (103) ist ferner derart konfiguriert, dass es Vorrichtungsinformationen der BLE-Vorrichtung an eine Quellvorrichtung überträgt, wenn die BLE-Vorrichtung eine Systemaktualisierung abschließt; oder
das BLE-Kommunikationsmodul (103) ist ferner konfiguriert zum: Übertragen der empfangenen Vorrichtungsinformationen der aktualisierten Vorrichtung an eine Quellvorrichtung zu, wenn die BLE-Vorrichtung Vorrichtungsinformationen einer aktualisierten Vorrichtung empfängt.

7. Datenaktualisierungssystem, **dadurch gekennzeichnet, dass** das Datenaktualisierungssystem mehrere Bluetooth-Niedrigenergie Vorrichtungen nach einem der Ansprüche 1 bis 6 umfasst.

8. Datenaktualisierungsverfahren, **dadurch gekennzeichnet, dass** es umfasst:
Übertragen der Aktualisierungsdaten durch eine BLE-Vorrichtung beim Erhalten und Speichern der Aktualisierungsdaten an eine periphere BLE-Vorrichtung, unter Verwendung einer BLE-Verbindung, bis erkannt wird, dass alle peripheren BLE-Vorrichtungen die Aktualisierungsdaten erhalten, wobei
die periphere BLE-Vorrichtung eine Vorrichtung ist, die es ermöglicht, eine Ende-zu-Ende-BLE-Kommunikation mit der BLE-Vorrichtung durchzuführen, welche die Aktualisierungsdaten erhält;
wobei das Übertragen der Aktualisierungsdaten an die periphere BLE-Vorrichtung umfasst:
Initiieren eines BLE-Broadcasting, wobei das BLE-Broadcasting Versionsinformationen der Aktualisierungsdaten trägt;
als Reaktion auf eine BLE-Kommunikationsanfrage von der peripheren BLE-Vorrichtung,
Aufbauen einer BLE-Kommunikationsverbindung zu der peripheren BLE-Vorrichtung und Senden der in der BLE-Vorrichtung gespeicherten Aktualisierungsdaten über die aufgebaute BLE-Kommunikationsverbindung; wobei die BLE-Kommunikationsanfrage initiiert wird, wenn die in dem BLE-Broadcasting übertragene Versionsinformation von der peripheren BLE-Vorrichtung gelesen wird und mit der Versionsinformation der in der peripheren BLE-Vorrichtung gespeicherten Aktualisierungsdaten nicht übereinstimmt.

9. Datenaktualisierungsverfahren nach Anspruch 8, **dadurch gekennzeichnet, dass** die BLE-Vorrichtung als Aktualisierungsveröffentlichungsvorrichtung verwendet wird, um die Aktualisierungsdaten zu erhalten;
nach dem Erhalten der Aktualisierungsdaten und vor dem Übertragen der Aktualisierungsdaten an eine periphere BLE-Vorrichtung umfasst das Datenaktualisierungsverfahren ferner:
Durchführen einer Sicherheitsverarbeitung an den erhaltenen Aktualisierungsdaten, um verschlüsselte Aktualisierungsdaten zu bilden; und
Übertragen der verschlüsselten Aktualisierungsdaten an die periphere BLE-Vorrichtung, während des Übertragens der Aktualisierungsdaten an eine periphere BLE-Vorrichtung.

10. Datenaktualisierungsverfahren nach Anspruch 9, **dadurch gekennzeichnet, dass** während der Durchführung der Sicherheitsverarbeitung an den erhaltenen Aktualisierungsdaten eine Verschlüsselungsverarbeitung an den Aktualisierungsdaten gemäß einem zwischen der Aktualisierungsveröffentlichungsvorrichtung und einer zu aktualisierenden Vorrichtung geteilten Schlüssel durchgeführt wird; oder
das Durchführen einer Sicherheitsverarbeitung an den erhaltenen Aktualisierungsdaten, um verschlüsselte Aktualisierungsdaten zu bilden, umfasst insbesondere: Extrahieren eines Vorrichtungsmerkmals; und Mischen des extrahierten Vorrichtungsmerkmals mit den Aktualisierungsdaten gemäß einer voreingestellten Regel, und Verwenden der gemischten Daten als die verschlüsselten Aktualisierungsdaten.

11. Datenaktualisierungsverfahren nach einem der Ansprüche 8 bis 10, **dadurch gekennzeichnet, dass** die BLE-Vorrichtung als Aktualisierungsdatenempfänger verwendet wird, um Aktualisierungsdaten von einem Sender zu empfangen, um so die Aktualisierungsdaten zu erhalten; und
nachdem die Aktualisierungsdaten empfangen wurden, umfasst das Datenaktualisierungsverfahren ferner:
Durchführen einer Sicherheitsverifizierung an den empfangenen Aktualisierungsdaten; und
Triggern der BLE-Vorrichtung zur Durchführung einer Systemaktualisierung, wenn die Verifizierung erfolgreich ist; oder
Übertragen der empfangenen Aktualisierungsdaten an die periphere BLE-Vorrichtung, wenn die Verifizierung fehlschlägt.

12. Datenaktualisierungsverfahren nach Anspruch 11, **dadurch gekennzeichnet, dass** die Durchführung der Sicherheitsverifizierung an den empfangenen Aktualisierungsdaten insbesondere Folgendes umfasst: Parsen eines Vorrichtungsmerkmals aus den empfangenen Aktualisierungsdaten; Matching des geparsten Vorrichtungsmerkmals mit einem Merkmal der BLE-Vorrichtung; und Feststellen, dass die Verifizierung erfolgreich ist, wenn das Matching erfolgreich ist; oder Feststellen, dass die Verifizierung fehlschlägt, wenn das Matching fehlschlägt; oder
das Durchführen einer Sicherheitsverifizierung an den empfangenen Aktualisierungsdaten insbesondere Folgendes umfasst: Entschlüsseln der empfangenen Aktualisierungsdaten gemäß dem zwischen der Aktualisierungsveröffentlichungsvorrichtung und der zu aktualisierenden Vorrichtung geteilten Schlüssel, um entschlüsselte Daten zu erhalten; Überprüfen der Korrektheit der entschlüsselten Daten; und Bestimmen, dass die Verifizierung erfolgreich ist, wenn die Überprüfung erfolgreich ist; oder Bestimmen, dass die Verifizierung fehlschlägt, wenn die Überprüfung fehlschlägt;
wobei das Vorrichtungsmerkmal ein Merkmal der Aktualisierungsveröffentlichungsvorrichtung und/oder der zu aktualisierenden Vorrichtung umfasst.

13. Datenaktualisierungsverfahren nach Anspruch 8, **dadurch gekennzeichnet, dass** die BLE-Vorrichtung als Aktualisierungsdatenempfänger verwendet wird, um Aktualisierungsdaten von einem Sender zu empfangen, um so die Aktualisierungsdaten zu erhalten; und
nachdem die Aktualisierungsdaten empfangen wurden, umfasst das Datenaktualisierungsverfahren ferner:
Aufzeichnen einer Quellvorrichtungsadresse, wobei die Quellvorrichtungsadresse eine Adresse einer BLE-Vorrichtung ist, welche die Aktualisierungsdaten an die BLE-Vorrichtung überträgt; und
Übertragen von Vorrichtungsinformationen der BLE-Vorrichtung an eine Quellvorrichtung, wenn die BLE-Vorrichtung die Systemaktualisierung abschließt; oder
Übertragen empfangener Vorrichtungsinformationen einer aktualisierten Vorrichtung an eine Quellvorrichtung, wenn die Vorrichtungsinformationen der aktualisierten Vorrichtung empfangen werden.

## Revendications

1. Dispositif Bluetooth à faible énergie (BLE), **caractérisé en ce qu'**il comprend un processeur (101) et un module de communication BLE (103), sachant que
le processeur (101) est configuré pour amener, lorsque le dispositif BLE obtient et stocke des données de mise à jour, le module de communication BLE (103) à transférer les données de mise à jour à un dispositif BLE périphérique moyennant une liaison BLE, jusqu'à détection que tous les dispositifs BLE périphériques obtiennent les données de mise à jour, sachant que
le dispositif BLE périphérique est un dispositif qui permet d'effectuer une communication BLE de bout en bout avec le dispositif BLE qui obtient les données de mise à jour;
sachant que le transfert des données de mise à jour au dispositif BLE périphérique comprend :
le lancement d'une diffusion BLE, sachant que la diffusion contient des informations de version des données de mise à jour ; et
en réponse à une demande de communication BLE provenant du dispositif BLE périphérique, l'établissement d'une connexion de communication BLE au dispositif BLE périphérique et l'envoi, via la connexion de communication BLE établie, des données de mise à jour stockées dans le dispositif BLE ;
sachant que la demande de communication BLE est lancée lorsque les informations de version contenues dans la diffusion BLE sont lues par le dispositif BLE périphérique et concordent avec les informations de version des données de mise à jour stockées dans le dispositif BLE périphérique.

2. Le dispositif BLE selon la revendication 1, **caractérisé en ce que** le dispositif BLE comprend en outre un module de cryptage (105) ;
le module de cryptage (105) est configuré pour effectuer, lorsque le dispositif BLE est utilisé comme dispositif de publication de mise à jour, un traitement de sécurité sur les données de mise à jour pour former des données de mise à jour cryptées ; et
le module de communication BLE (103) est en outre configuré pour transférer les données de mise à jour cryptées au dispositif BLE périphérique.

3. Le dispositif BLE selon la revendication 2, **caractérisé en ce que** le module de cryptage (105) comprend un sous-module d'extraction configuré pour extraire une caractéristique de dispositif et un sous-module de mélange configuré pour : mélanger la caractéristique de dispositif extraite avec les données de mise à jour selon une règle prédéfinie et utiliser des données mélangées en tant que les données de mise à jour cryptées ; ou
le module de cryptage (105) est configuré pour, lors de l'exécution d'un traitement de sécurité sur les données de mise à jour, effectuer un traitement de cryptage sur les données de mise à jour selon un clé partagée entre le dispositif de publication de mise à jour et un dispositif à mettre à jour de manière à former les données de mise à jour cryptées ;
sachant que la caractéristique de dispositif comprend une caractéristique du dispositif de publication de mise à jour et/ou d'un dispositif à mettre à jour.

4. Le dispositif BLE selon l'une quelconque des revendications 1 à 3, **caractérisé en ce que** le dispositif BLE comprend en outre un module de décryptage (106) ; et
le module de décryptage (106) est configuré pour :
effectuer une vérification de sécurité sur des données de mise à jour reçues lorsque le dispositif BLE est utilisé comme récepteur de données de mise à jour ; et
amener le dispositif BLE à effectuer une mise à jour de système si la vérification réussit ; ou
transférer les données de mise à jour reçues au dispositif BLE périphérique moyennant le module de communication BLE (103) si la vérification échoue.

5. Le dispositif BLE selon la revendication 4, **caractérisé en ce que** le module de décryptage (106) comprend un sous-module d'analyse syntaxique configuré pour extraire une caractéristique de dispositif des données de mise à jour reçues et un sous-module d'appariement configuré pour : apparier la caractéristique de dispositif extraite avec une caractéristique du dispositif BLE ; et déterminer que la vérification réussit si l'appariement réussit ; ou déterminer que la vérification échoue si l'appariement échoue ; ou
le module de décryptage (106) est configuré pour : décrypter les données de mise à jour reçues moyennant la clé partagée entre le dispositif de publication de mise à jour et le dispositif à mettre à jour, pour obtenir des données décryptées lors de l'exécution d'une vérification de sécurité sur les données de mise à jour reçues ; contrôler l'exactitude des données décryptées ; et déterminer que la vérification réussit si le contrôle réussit ; ou déterminer que la vérification échoue si le contrôle échoue ;
sachant que la caractéristique de dispositif comprend une caractéristique du dispositif de publication de mise à jour et/ou du dispositif à mettre à jour.

6. Le dispositif BLE selon la revendication 1, **caractérisé en ce que** le dispositif BLE comprend en outre un module d'enregistrement d'adresse source (107) ;
le module d'enregistrement d'adresse source (107) est configuré pour : enregistrer une adresse de dispositif source lorsque des données de mise à jour sont reçues si le dispositif BLE est utilisé comme récepteur de données de mise à jour ;
sachant que l'adresse de dispositif source est une adresse d'un dispositif BLE qui transfère les données de mise à jour au dispositif BLE ; et
le module de communication BLE (103) est en outre configuré pour transférer des informations de dispositif du dispositif BLE à un dispositif source lorsque le dispositif BLE accomplit une mise à jour de système ; ou
le module de communication BLE (103) est en outre configuré pour : transférer les informations de dispositif reçues du dispositif mis à jour à un dispositif source lorsque le dispositif BLE reçoit des informations de dispositif d'un dispositif mis à jour.

7. Système de mise à jour de données, **caractérisé en ce que** le système de mise à jour de données comprend plusieurs dispositifs Bluetooth à faible énergie selon l'une quelconque des revendications 1 à 6.

8. Procédé de mise à jour de données, **caractérisé en ce qu'**il comprend :
le transfert, par un dispositif BLE lors de l'obtention et du stockage de données de mise à jour, des données de mise à jour à un dispositif BLE périphérique moyennant une liaison BLE, jusqu'à détection que tous les dispositifs BLE périphériques obtiennent les données de mise à jour, sachant que
le dispositif BLE périphérique est un dispositif qui permet d'effectuer une communication BLE de bout en bout avec le dispositif BLE qui obtient les données de mise à jour;
sachant que le transfert des données de mise à jour au dispositif BLE périphérique comprend :
le lancement d'une diffusion BLE, sachant que la diffusion BLE contient des informations de version des données de mise jour ;
en réponse à une demande de communication BLE provenant du dispositif BLE périphérique, l'établissement d'une connexion de communication BLE au dispositif BLE périphérique et l'envoi, via la connexion de communication BLE établie, des données de mise à jour stockées dans le dispositif BLE ;
sachant que la demande de communication BLE est lancée lorsque les informations de version contenues dans la diffusion BLE sont lues par le dispositif BLE périphérique et concordent avec les informations de version des données de mise à jour stockées dans le dispositif BLE périphérique.

9. Le procédé de mise à jour de données selon la revendication 8, **caractérisé en ce que** le dispositif BLE est utilisé comme dispositif de publication de mise à jour pour obtenir les données de mise à jour ;
après que les données de mise à jour sont obtenues, et avant le transfert des données de mise à jour à un dispositif BLE périphérique, le procédé de mise à jour de données comprend en outre :
l'exécution d'un traitement de sécurité sur les données de mise à jour obtenues pour former des données de mise à jour cryptées ; et
le transfert des données de mise à jour cryptées au dispositif BLE périphérique, pendant le transfert des données de mise à jour à un dispositif BLE périphérique.

10. Le procédé de mise à jour de données selon la revendication 9, **caractérisé en ce que**, pendant l'exécution d'un traitement de sécurité sur les données de mise à jour obtenues, un traitement de cryptage est effectué sur les données de mise à jour selon une clé partagée entre le dispositif de publication de mise à jour et un dispositif à mettre à jour ; ou
l'exécution d'un traitement de sécurité sur les données de mise à jour obtenues pour former des données de mise à jour cryptées comprend spécifiquement : l'extraction d'une caractéristique de dispositif ; et le mélange de la caractéristique de dispositif extraite avec les données de mise à jour selon une règle prédéfinie, et l'utilisation de données mélangées en tant que les données de mise à jour cryptées.

11. Le procédé de mise à jour de données selon l'une quelconque des revendications 8 à 10, **caractérisé en ce que** le dispositif BLE est utilisé comme récepteur de données de mise à jour pour recevoir des données de mise à jour depuis un émetteur, de manière à obtenir les données de mise à jour ; et
après que les données de mise à jour sont reçues, le procédé de mise à jour de données comprend en outre :
l'exécution d'une vérification de sécurité sur les données de mise à jour reçues ; et
le fait d'amener le dispositif BLE à effectuer une mise à jour de système si la vérification réussit ; ou
le transfert des données de mise à jour reçues au dispositif BLE périphérique si la vérification échoue.

12. Le procédé de mise à jour de données selon la revendication 11, **caractérisé en ce que** l'exécution d'une vérification de sécurité sur les données de mise à jour reçues comprend spécifiquement : l'extraction d'une caractéristique de dispositif à partir des données de mise à jour reçues ; l'appariement de la caractéristique de dispositif extraite avec une caractéristique du dispositif BLE ; et le fait de déterminer que la vérification réussit si l'appariement réussit ; ou le fait de déterminer que la vérification échoue si l'appariement échoue ; ou
l'exécution d'une vérification de sécurité sur les données de mise à jour reçues comprend spécifiquement : le décryptage des données de mise à jour reçues selon la clé partagée entre le dispositif de publication de mise à jour et le dispositif à mettre à jour, pour obtenir des données décryptées ; le contrôle de l'exactitude des données décryptées ; et le fait de déterminer que la vérification réussit si le contrôle réussit ; ou le fait de déterminer que la vérification échoue si le contrôle échoue ;
sachant que la caractéristique de dispositif comprend une caractéristique du dispositif de publication de mise à jour et/ou du dispositif à mettre à jour.

13. Le procédé de mise à jour de données selon la revendication 8, **caractérisé en ce que** le dispositif BLE est utilisé comme récepteur de données de mise à jour pour recevoir des données de mise à jour depuis un émetteur, de manière à obtenir les données de mise à jour ; et
après que les données de mise à jour sont reçues, le procédé de mise à jour de données comprend en outre :
l'enregistrement d'une adresse de dispositif source, sachant que l'adresse de dispositif source est une adresse d'un dispositif BLE qui transfère les données de mise à jour au dispositif BLE ; et
le transfert d'informations de dispositif du dispositif BLE à un dispositif source lorsque le dispositif BLE accomplit une mise à jour de système ; ou
le transfert d'informations de dispositif reçues d'un dispositif mis à jour à un dispositif source lorsque les informations de dispositif du dispositif mis à jour sont reçues.
